# EUROPEAN PATENT APPLICATION

(11) **EP 4 654 078 A1**
(43) Date of publication of application: **26.11.2025**
(21) Application number: 25176604.4
(22) Date of filing: 15.05.2025
(51) Int. Cl.: G06N 3/045, G06N 3/063, G06N 3/082, G06N 3/084, G06N 3/098

(54) **GRAPH NEURAL NETWORK HARDWARE ACCELERATOR**

(30) Priority: 23.05.2024 US 202418672778
(71) Applicant: Microsoft Technology Licensing, LLC, Redmond, WA 98052 (US)
(72) Inventor: KUMARAPILLAI CHANDRIKAKUTTY, Harikrishnan, Redmond, 98052 (US); MUNIPALLI, Sirish Kumar, Redmond, 98052 (US); SHASHANK, Fnu, Redmond, 98052 (US); HTET, Aung Thu, Redmond, 98052 (US)
(74) Representative: CMS Cameron McKenna Nabarro Olswang LLP

(57) **Abstract**

The description relates to graph neural network hardware accelerators. One example can include multiple FPGAs or ASICs that each include multiple parallel arranged processing elements and a shared memory. Individual processing elements are configured to prune a subgraph of a graph neural network model. The shared memory is configured to recombine the pruned subgraphs to generate a pruned graph neural network model.

## Description

### BACKGROUND

Graph Neural Networks (GNNs) are a type of artificial neural networks (ANN) that represent data as graphs. As with other artificial neural networks, GNN models are trained before use. The training process involves large amounts of computing resources.

### BRIEF DESCRIPTION OF THE DRAWINGS

The accompanying drawings illustrate implementations of the concepts conveyed in the present patent. Features of the illustrated implementations can be more readily understood by reference to the following description taken in conjunction with the accompanying drawings. Like reference numbers in the various drawings are used wherever feasible to indicate like elements. Further, the left-most numeral of each reference number conveys the figure and associated discussion where the reference number is first introduced.
FIGS. 1A, 1B, and 7 show example systems in which the present concepts can be applied in some implementations.
FIGS. 2 and 3 show example GNNTP hardware accelerator configurations that are consistent with some implementations of the present concepts.
FIGS. 4-6 show example algorithms or flowcharts for accomplishing hardware accelerator based GNN training and pruning concepts in accordance with some implementations.

### DETAILED DESCRIPTION

This patent relates to hardware accelerators that are configured to train and prune GNN models. Existing server configurations, such as data center devices, entail various ratios of central processing unit (CPU) and graphics processing unit (GPU) based devices. These data center configurations lend themselves to various general and artificial intelligence (AI) related computing tasks performed by the devices. For instance, the devices may employ various trained AI models, such as ANNs including GNNs to answer user queries/prompts. However, these existing devices that entail CPUs and GPUs struggle to train large GNNs. The size of the untrained and unpruned GNN models and the calculations involved in training and pruning can overwhelm existing CPU and GPU based devices. For instance, the training phase of a GNN model takes very long periods of time across many devices and occupies large amounts of memory to the extent that the devices are unavailable for other tasks for extended periods of time.

The present concepts provide a technical solution involving specialized hardware accelerators that can efficiently train a GNN model and reduce the size of the GNN model through pruning. The trained and pruned GNN models can then be readily employed on the existing device CPUs and GPUs to perform desired tasks. The GNN models can include graph convolutional networks (GCNs), graph attention networks (GATs), and graph recurrent networks (GRNs), among others.

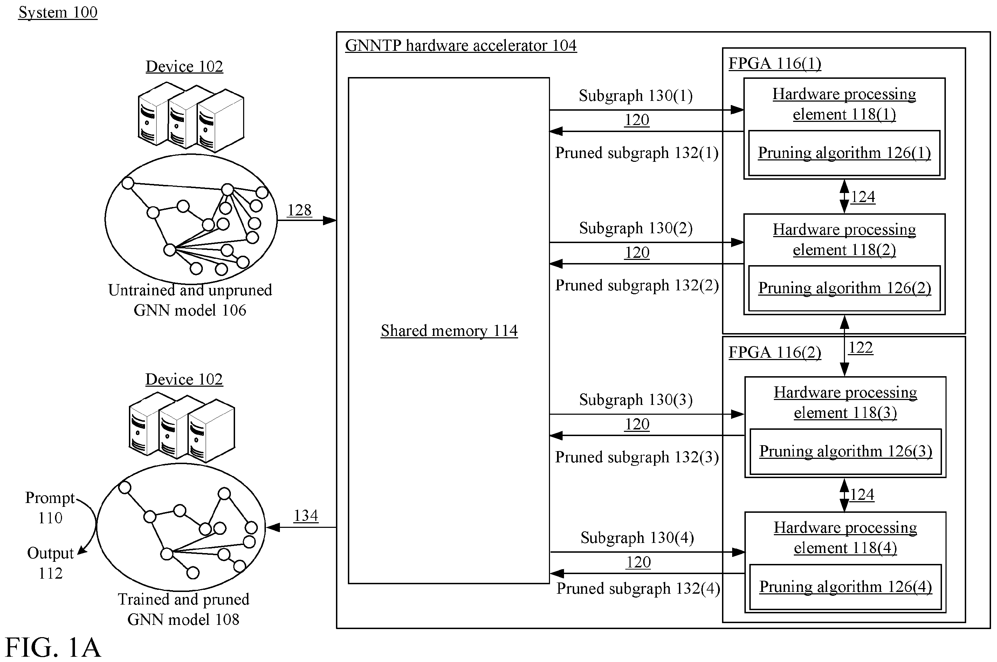

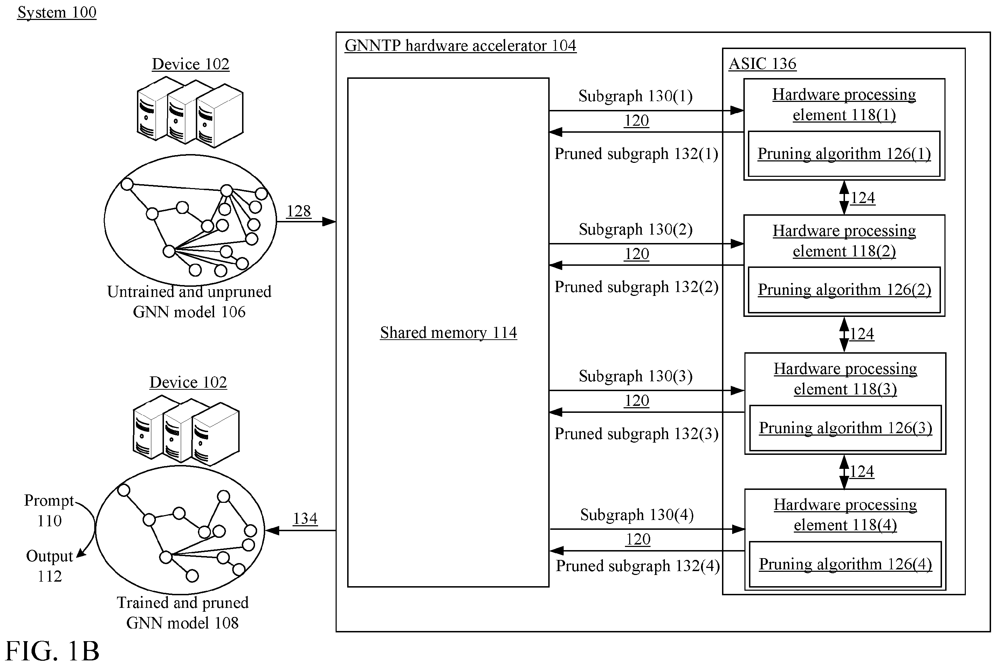

FIGS. 1A and 1B collectively show example systems 100 that can implement some of the present concepts. The systems include traditional CPU and/or GPU centric devices 102. The system also includes a graph neural network training and pruning hardware accelerator (GNNTP hardware accelerator) 104. Functionally, the device 102 sends an untrained and unpruned GNN model 106 to the GNNTP hardware accelerator 104. The GNNTP hardware accelerator 104 trains and prunes the GNN model and returns a trained and pruned GNN model 108 to the device 102. The device 102 can then employ the trained and pruned GNN model 108 for various tasks. For instance, the device can receive a prompt 110 from a user and employ the trained and pruned GNN model 108 to generate a responsive output 112.

FIG. 1A shows a configuration where the GNNTP hardware accelerator 104 includes shared memory 114 and multiple field programable gate arrays (FPGAs) 116. In this case, the FPGAs 116 include multiple hardware processing elements (HPEs) 118 that are in communication with the shared memory 114 as indicated at 120. The FPGAs operate in parallel to one another and can communicate with one another as indicated at 122. The hardware processing elements 118 within an individual FPGAs 116 also can communicate with one another as indicated at 124. The hardware processing elements 118 include pruning algorithms 126.

The GNNTP hardware accelerator 104 receives the untrained and unpruned GNN model 106 as input from the device 102 as indicated at 128. The untrained and unpruned GNN model 106 is a relatively big graph of nodes/neurons with different kinds of links/connections between the nodes. The GNNTP hardware accelerator 104 stores the untrained and unpruned GNN model 106 in the shared memory 114. The GNNTP hardware accelerator 104 divides the untrained and unpruned GNN model 106 into multiple subgraphs 130. Individual subgraphs 130 are supplied to individual hardware processing elements 118. The pruning algorithms 126 train and prune the subgraphs 130 and return trained and pruned subgraphs 132 to the shared memory. For sake of simplicity FIG. 1A shows four subgraphs 130 handled by four hardware processing elements 118 spread across two FPGAs 116. If there are more subgraphs 130, then an additional subgraph is provided to an individual hardware processing element 118 when the individual hardware processing element 118 returns a trained and pruned subgraph 132 (e.g., the processing elements prune subgraphs sequentially until all the subgraphs are pruned). Other implementations can include fewer or more FPGAs 116 than are illustrated here. Further, individual FPGAs 116 can include more parallel hardware processing elements 118 than the two parallel hardware processing units per FPGA that is illustrated.

The trained and pruned subgraphs 132 are recombined in the shared memory 114 to generate the trained and pruned GNN model 108. The GNNTP hardware accelerator 104 can further process the trained and pruned GNN model 108 before sending it to back to the device 102 as indicated at 134. For instance, the post pruning processing can entail ensuring the remaining neurons and connections are reconnected to form a smaller, more efficient network. The trained and pruned GNN model 108 is relatively small compared to the untrained and unpruned GNN model 106 in both the number of nodes and the number of connections between nodes.

To summarize some of the aspects introduced above, the FPGA-based architecture accelerates the computation of the pruning algorithms 126. FPGAs offer parallelism and can be programmed to execute specific tasks efficiently, which makes them suitable for the parallel processing demands of GNNs.

FIG. 1B shows a configuration where the GNNTP hardware accelerator 104 includes shared memory 114 and an application specific integrated circuit (ASIC) 136 that replaces the FPGAs 116. While a single ASIC 136 is employed in the illustrated implementation, other implementations can employ multiple ASICs that communicate with the shared memory. Similar to the FPGA implementation, the ASIC can include multiple parallel hardware processing elements 118 that employ pruning algorithms 126 on subgraphs 130. The parallel hardware processing elements 118 produce trained and pruned subgraphs 132 that are combined to generate the trained and pruned GNN model 108.

Both of these implementations provide a technical solution that allows existing CPU/GPU based devices to offload pruning and training of GNN models to the GNNTP hardware accelerator so that these devices can continue to perform other tasks. The GNNTP hardware accelerator returns the trained and pruned GNN model that is much smaller than the untrained GNN model and can be handled by the existing devices to handle GNN appropriate tasks.

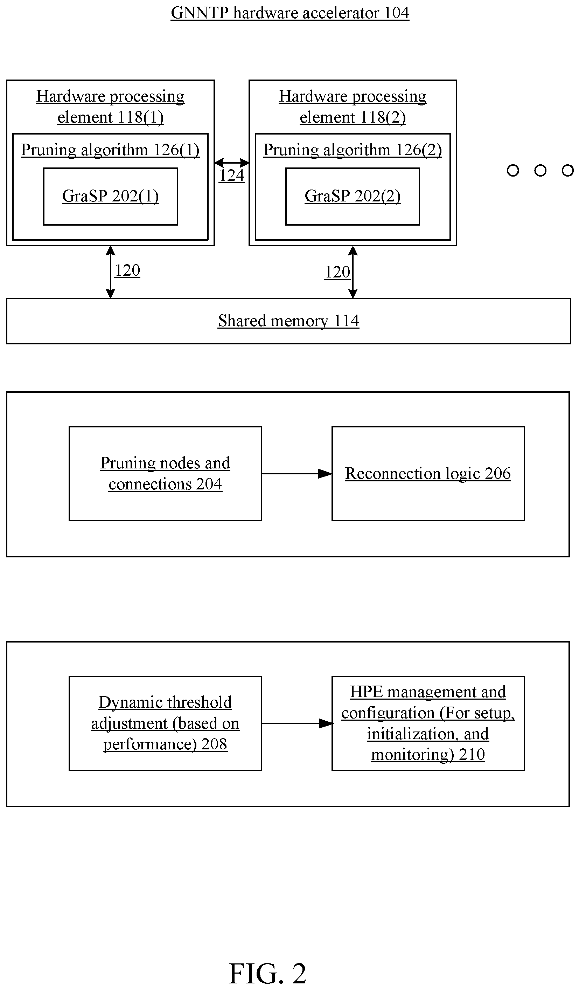

FIG. 2 shows additional aspects of example system 100 relating to example GNNTP hardware accelerator 104. As indicated above, the GNNTP hardware accelerator 104 includes multiple hardware processing elements 118. Hardware processing elements 118 are illustrated in FIG. 2 and three dots (o o o) are used to indicate that more hardware processing elements can be employed. The hardware processing elements 118 can communicate with one another as indicated by arrow 124 and with the shared memory as indicated by arrow 120.

The hardware processing elements 118 employ pruning algorithms 126 to prune portions (e.g., subgraphs) of the untrained and unpruned GNN model. In this case, the pruning algorithms 126 entail Gradient Signal Preservation (GraSP) pruning algorithms 202. Other example pruning algorithms 126 include Magnitude-based pruning, L1 and L2 Regularization (Weight Decay), Optimal Brain Damage (OBD) and Optimal Brain Surgeon (OBS), Variational Dropout, Dynamic Network Surgery, Layer-wise Relevance Propagation (LRP), Neuron Shrinkage, Structural Pruning, Soft Filter Pruning, Network Slimming, Lottery Ticket Hypothesis, Energy Aware Pruning, and/or Meta-Pruning, among others.

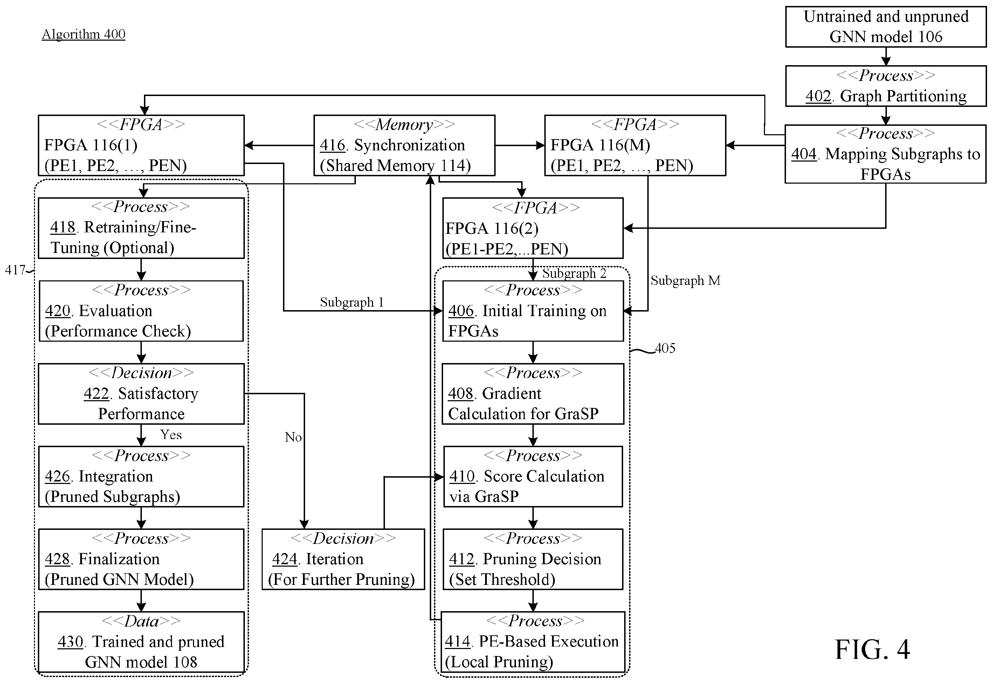

The pruning algorithms 126 prune nodes and connections of the subgraphs as indicated at 204. Pruning can involve comparing nodes and/or edges to a threshold. An initial threshold value can be utilized at initialization and then evaluated as discussed below. Reconnection logic 206 is employed to recombine the pruned and trained subgraphs back into the pruned and trained GNN model. These aspects are described in more detail below relative to FIG. 4.

The pruning performance is evaluated and adjusted via dynamic threshold adjustment at 208. As mentioned above, the HPE management and configuration (indicated generally at 210) can be set up with initial values. The performance of the pruning algorithm can then be evaluated and improved via the dynamic adjustments of the threshold. These aspects are described in more detail below relative to FIG. 4.

In this implementation the GNNTP hardware accelerator 104 architecture includes multiple hardware processing elements 118 connected in parallel, each performing the GraSP algorithm 202 on a portion (e.g., subgraph) of the GNN model. This distributed approach allows for simultaneous computation, leading to faster pruning and training times. Depending on the size of the GNN model if the graph does not fit, this implementation can facilitate storing intermediate results and using them for the next batch.

The hardware processing elements 118 use score thresholds to determine which neurons and connections to prune. These score thresholds can be dynamically adjusted based on the network's performance during training, allowing for adaptive and potentially more effective pruning. The hardware processing elements 118 communicate through shared memory 114, which enables the exchange of information about the neurons and connections being processed. This design reduces the overhead and latency typically associated with communication in distributed systems.

The reconnection logic 206 reconfigures the GNN model after pruning. The remaining neurons and connections are reconnected to form a smaller, more efficient network. The reconfiguration ensures that the trained and pruned GNN model still functions correctly and maintains its accuracy.

The hardware processing elements 118 prioritize high scoring neurons and connections during processing. The hardware processing elements prioritize the processing of high-scoring neurons and connections to focus computational resources on the most important parts of the GNN model. This provides a technical solution that improves the overall efficiency of the pruning process. In summary, one of the novel aspects lies in the integration of the GraSP algorithm with an FPGA-based hardware architecture that enables parallel processing, dynamic adjustment of pruning thresholds, and efficient communication between hardware processing elements. This approach enhances the real-time pruning capabilities of GNNs while maintaining or improving network performance.

One key idea behind employing the GraSP algorithm is to prune weights in a way that preserves the flow of gradients through the network. This is based on the hypothesis that preserving the gradient flow during the initial phase of training is crucial for successful training of deep neural networks.

The description now explains how the GraSP algorithm works within the hardware processing elements 118 of GNNTP hardware accelerator 104. The first aspect relates to initialization. The GNNTP hardware accelerator 104 receives the untrained and unpruned GNN. This GNN is initialized with a certain set of weights, typically using a method like Glorot or He initialization. These methods provide a way to initialize the weights of the GNN with good variance.

The next aspect relates to computing gradients. Before any training takes place, the GNN's gradients are computed using a batch of training data. These gradients reflect the sensitivity of the loss function to changes in the weights and are indicative of how much each weight contributes to learning.

The next aspect relates to calculating scores. The GraSP algorithm calculates a score for each weight (or connection) in the GNN. This score is based on both the gradient and the weight's value. The score aims to estimate the importance of each weight to the gradient flow. The scoring function typically involves computing the Hessian-gradient product (Hg), where H is the Hessian matrix (second-order derivatives of the loss with respect to the weights) and g is the gradient vector. The computation of the exact Hessian is often impractical due to its size and computational cost, so approximations or heuristics may be used.

The next aspect relates to pruning weights. Weights are ranked based on their scores, and a percentage of weights with the lowest scores are pruned (set to zero). The idea is that these weights are deemed least important for preserving the gradient flow and thus can be removed with the least impact on learning ability.

The next aspect relates to retraining the pruned GNN. After training and pruning, the remaining pruned and trained GNN subgraphs can be retrained to fine-tune the weights and potentially recover any lost performance due to pruning. Retraining is not always necessary, but it can help the pruned and trained GNN model adapt to the reduced capacity.

The process can be repeated iteratively, pruning more weights at each step until the desired GNN model sparsity is achieved to achieve the trained and pruned GNN model. The GraSP algorithm focuses on preserving the flow of gradients early in training, which is valuable for the network to learn effectively. By doing so, GraSP ensures that the pruned GNN retains as much of the original network's learning capacity as possible, despite having fewer weights. This method contrasts with other pruning methods that may focus on weights' magnitudes or other criteria that do not directly consider the impact of pruning on the learning process. GraSP's approach allows for pruning to occur before the full training process, which can save significant computational resources, especially for large GNNs.

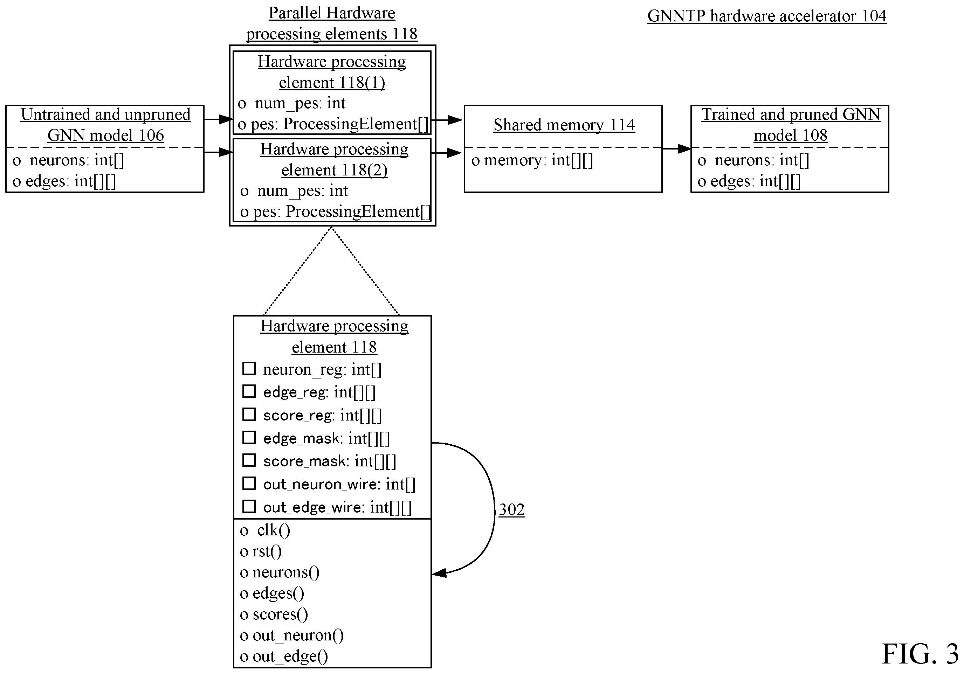

To summarize, some of the aspects described above include hardware-level pruning of graph neural networks (GNNs) using an FPGA or ASIC-based architectures. One of the technical solutions is the application of the GraSP (Gradient Signal Preservation) pruning algorithm within a specialized hardware environment to enhance the efficiency and speed of processing in GNNs. These aspects are described in more details below relative to FIGS. 3 and 4.

FIG. 3 shows additional aspects of example GNNTP hardware accelerator 104. FIG. 3 shows pipeline-based configuration 302 of the GNNTP hardware accelerator 104. The GNNTP hardware accelerator's parallel hardware processing elements 118 receive the untrained and unpruned GNN model 106.

As mentioned above, within GNNTP hardware accelerator 104, multiple hardware processing elements 118 operate in parallel to one another. The hardware processing elements including logic gates that are organized to perform the pruning using pruning algorithms, such as GraSP.

FIG. 3 shows the pipeline nature of the GNNTP hardware accelerator 104. The parallel hardware processing elements 118 receive the untrained and unpruned GNN model 106. The untrained and unpruned GNN model 106 includes multiple neurons and edges/connections between neurons. Individual hardware processing elements 118(1), 118(2), etc., operate on individual subgraphs of the untrained and unpruned GNN model 106 to train and prune the subgraphs. This operation entails scoring the neurons and edges and retaining the relatively higher scoring neurons and edges and pruning the relatively lower scoring neurons and edges as indicated generally at 302. The trained and pruned subgraphs are sent to shared memory 114. The trained and pruned subgraphs can be recombined to form the trained and pruned GNN model 108. The trained and pruned GNN model 108 has fewer neurons and edges than the untrained and unpruned GNN model 106.

FIG. 4 shows an algorithm 400 that achieves hardware accelerator based GNN model training and pruning. This implementation utilizes GNNTP hardware accelerator 104 with FPGAs 116 employing the hardware processing elements 118 and shared memory 114. The algorithm starts with the untrained and unpruned GNN model 106. The pruning process of the untrained and unpruned GNN model with graph partitioning, mapping to FPGAs, and communication via shared memory is described below.

The process entails graph partitioning at 402. The large untrained and unpruned GNN model 106 is divided into smaller subgraphs 130 to fit within the computational constraints of individual FPGAs.

Subgraphs are mapped to FPGAs at 404. Each subgraph is assigned to a separate FPGA, ensuring that the workload is evenly distributed across the hardware resources. Each FPGA contains multiple hardware processing elements (HPEs 118) that will handle computations for individual subgraphs. This is represented by the dotted line 405 encompassing blocks 406-414, which are performed by individual HPEs on individual subgraphs. Due to space constraints on the drawing page the HPEs 118 are labelled on the drawing page as HPEs without the "118" designator and with only the corresponding suffix. Also, 'PE' may be substituted for 'HPE' because of space constraints on the drawing page.

Initial training on the FPGAs is shown at 406. The subgraphs 130 are trained on their respective FPGAs. This training involves forward and backward passes to adjust weights in the GNN according to the loss function. Due to space constraints on the drawing page the subgraphs are labeled without the "130" designator and only with the corresponding suffix (e.g., 'subgraph 130(1)' may be written as 'subgraph 1.'

Gradient calculation for GraSP is shown at 408. After initial training, the gradient of the loss function with respect to each connection is calculated. This is done within each FPGA for the respective subgraph it contains.

Score Calculation via GraSP is shown at 410. The GraSP algorithm is used to calculate scores for each connection within the subgraphs. Connections with lower scores are identified as candidates for pruning, as the lower scoring connections have less impact on the gradient flow.

Pruning Decision (Set Threshold) is shown at 412. A threshold is set for pruning based on the scores calculated by GraSP. Connections falling below the threshold are pruned.

PE-Based execution (Local Pruning) is shown at 414. Each PE within the FPGAs executes the pruning decisions locally for the part of the subgraph it is responsible for. This step is performed in parallel across all PEs and FPGAs.

Synchronization (on shared memory 114) is shown at 416. After local pruning, the PEs synchronize with each other through the shared memory system (e.g., shared memory 114). This ensures that all PEs have consistent information about the pruned connections and the overall structure of the GNN. As indicated by dotted line 417, the process turns to blocks 418-422 and 426-430, which are performed globally in relation to the shared memory 114.

Retraining/Fine-Tuning (Optional) is shown at 418. If necessary/desired, the pruned subgraphs can be retrained or fine-tuned to recover any lost performance due to pruning. This step is also performed locally within each FPGA.

Evaluation (Performance Check) is shown at 420. The performance of the trained and pruned GNN model is evaluated.

A decision regarding the performance is shown at 422. If the performance is not satisfactory ('no' at 422), further pruning iterations can be carried out at 424.

Iteration (For Further Pruning) is shown at 424. If further pruning is needed/desired, the process iterates, starting from score calculation 410. The threshold for pruning can be adjusted to prune more or fewer connections based on the desired sparsity and performance. The loop continues until the trained and pruned GNN model provides satisfactory performance according to predefined metrics.

Alternatively, if the decision at 422 indicates satisfactory performance (e.g., 'yes' at 422), then the process proceeds to block 426.

Integration (Pruned Subgraphs) is shown at 426. Once the pruned subgraphs meet the desired performance criteria, they are integrated back into a single, cohesive trained and pruned GNN model.

Finalization (trained and pruned GNN Model) is shown at 428. The final trained and pruned GNN model is ready for deployment or further analysis. This trained and pruned GNN model should retain most or all of the original accuracy while being more efficient in terms of computational resources.

The trained and pruned GNN model is shown at 430. The final output is trained and pruned GNN model 108 that is optimized for efficiency while maintaining high accuracy.

To summarize some of the aspects described above, the GNNTP hardware accelerator provides technical solutions over existing configurations. The GNNTP hardware accelerator can employ FPGAs and/or ASICs that allow for the design of custom hardware circuits tailored to the specific pruning algorithms. This customization can eliminate unnecessary operations and optimize data flow, leading to faster execution compared to running on a general-purpose processor.

The GNNTP hardware accelerator employs FPGAs and/or ASICs that excel at parallel processing due to their architecture, which allows multiple operations to occur simultaneously. This is particularly advantageous for pruning algorithms like GraSP, which involve matrix operations that can be parallelized. Within the GNNTP hardware accelerator, resources can be dedicated to specific tasks without the overhead of multitasking operating systems. This dedication can improve performance and reduce latency. The ASICs or FPGAs consume less power for specific tasks than CPUs or GPUs, translating into better performance per watt, which is crucial for large-scale or edge computing scenarios. The GNNTP hardware accelerator employs dedicated hardware circuitry that avoids bottlenecks associated with software implementations. Existing software implementations may face bottlenecks due to factors such as memory bandwidth limitations, cache misses, and context switching, which the present hardware implementations can avoid. The GNNTP hardware accelerator offers performance gains ranging from 2x to 10x or more improvement over the efficiency of existing software solutions.

GNNTP hardware accelerator pruning can be applied to a variety of graph neural network architectures, including graph convolutional networks (GCNs), graph attention networks (GATs), and graph recurrent networks (GRNs). By reducing the size of the GNN and optimizing its computation, hardware-level pruning can improve the efficiency and speed of GNNs, making them more practical for real-world applications.

The GNNTP hardware accelerator hardware circuitry for pruning the GNNs can employ the GraSP algorithm (Greedy Randomized Adaptive Search Procedure), among others. GraSP uses a group sparsity regularization technique to identify important neurons and connections in the GNN. GraSP assigns a score to each neuron and connection based on its contribution to the network's overall performance, and then prunes the lowest-scoring elements.

The GNNTP hardware accelerator hardware circuitry can consist of multiple hardware processing elements (HPEs or PEs) connected in a parallel configuration, each of which perform the GraSP algorithm on a subset of the network's neurons and connections. Each HPE can have its own set of weights and biases, which can be updated during the training process using a backpropagation algorithm. The HPEs can communicate with each other using a shared memory space to exchange information about the neurons and connections they are processing.

During the pruning phase, the HPEs can use their assigned score thresholds to identify the lowest-scoring neurons and connections in their subset (e.g., sub-graph) of the GNN, and then remove them from the GNN. The remaining neurons and connections can be reconnected to form a pruned GNN with reduced size and improved efficiency.

To optimize the performance of the hardware circuit, the HPEs can be configured to prioritize the processing of high-scoring neurons and connections, and to dynamically adjust their score thresholds based on the GNN's performance during training. Overall, using an FPGA-based or ASIC-based hardware circuit would provide a scalable and efficient solution for the GraSP algorithm, enabling high-speed computation and real-time pruning of GNNs.

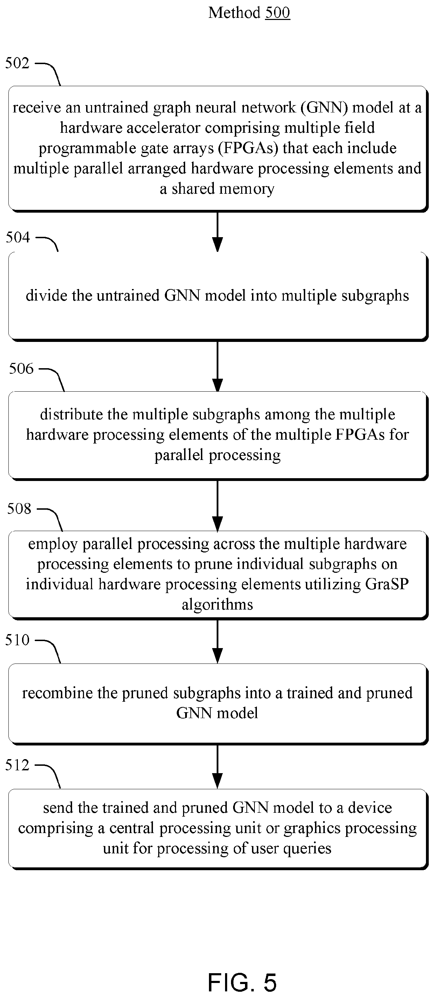

Several implementations are described in detail above. FIG. 5 shows an example GNN hardware accelerator training and pruning method or technique 500.

Block 502 can receive an untrained graph neural network (GNN) model at a hardware accelerator comprising multiple field programmable gate arrays (FPGAs) that each include multiple parallel arranged hardware processing elements and a shared memory. Similar methods can be employed on other GNN hardware accelerators, such as those employing ASICs.

Block 504 can divide the untrained GNN model into multiple subgraphs.

Block 506 can distribute the multiple subgraphs among the multiple hardware processing elements of the multiple FPGAs for parallel processing.

Block 508 can employ parallel processing across the multiple hardware processing elements to prune individual subgraphs on individual hardware processing elements utilizing GraSP algorithms. Other implementations can employ other pruning algorithms.

Block 510 can recombine the pruned subgraphs into a trained and pruned GNN model. The trained and pruned GNN model can be evaluated and further trained and/or pruned as desired to meet performance criteria. This can be accomplished generally and/or at the subgraph level.

Block 512 can send the trained and pruned GNN model to a device that has a central processing unit or graphics processing unit for processing tasks, such as user queries. Thus, the hardware accelerator is configured to train and prune the GNN model. The hardware accelerator does not employ the trained and pruned GNN model for tasks. Instead, the hardware accelerator sends the trained and pruned GNN model to other devices, such as devices employing a combination of CPUs and GPUs to employ the trained and pruned GNN model to perform various tasks, such as to answer queries or prompts from users.

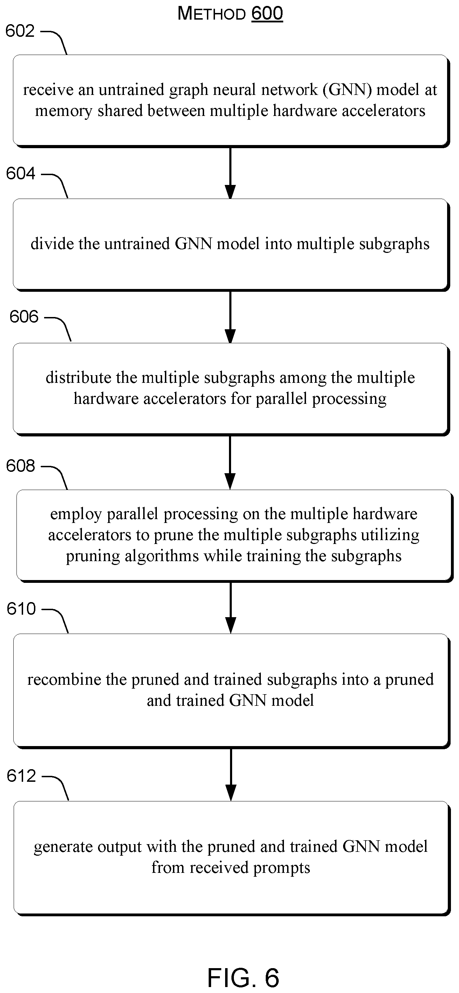

FIG. 6 shows another example method or technique 600.

Block 602 can receive an untrained graph neural network (GNN) model at memory shared between multiple hardware accelerators. For instance, a GNNTP hardware accelerator could receive the untrained GNN model from a CPU or GPU centric device. In some cases, the received GNN model could be partially trained and/or pruned but will be comparatively untrained and unpruned compared to the trained and pruned GNN produced by the method detailed below.

Block 604 can divide the untrained GNN model into multiple subgraphs.

Block 606 can distribute the multiple subgraphs among the multiple hardware accelerators for parallel processing. The parallel processing occurs both across the hardware accelerators (e.g., across multiple FPGAs or multiple ASICs) and across processing elements within an individual hardware accelerator.

Block 608 can employ parallel processing on the multiple hardware accelerators to prune the multiple subgraphs utilizing pruning algorithms while training the subgraphs.

Block 610 can recombine the pruned and trained subgraphs into a pruned and trained GNN model. Performance of the pruned and trained GNN model can be tested. If performance is not satisfactory, additional training and pruning can be performed on the pruned and trained GNN model and/or on the subgraphs making up the pruned and trained GNN model.

Block 612 can generate output with the pruned and trained GNN model from received prompts.

The order in which the methods are described is not intended to be construed as a limitation, and any number of the described acts can be combined in any order to implement the method, or an alternate method.

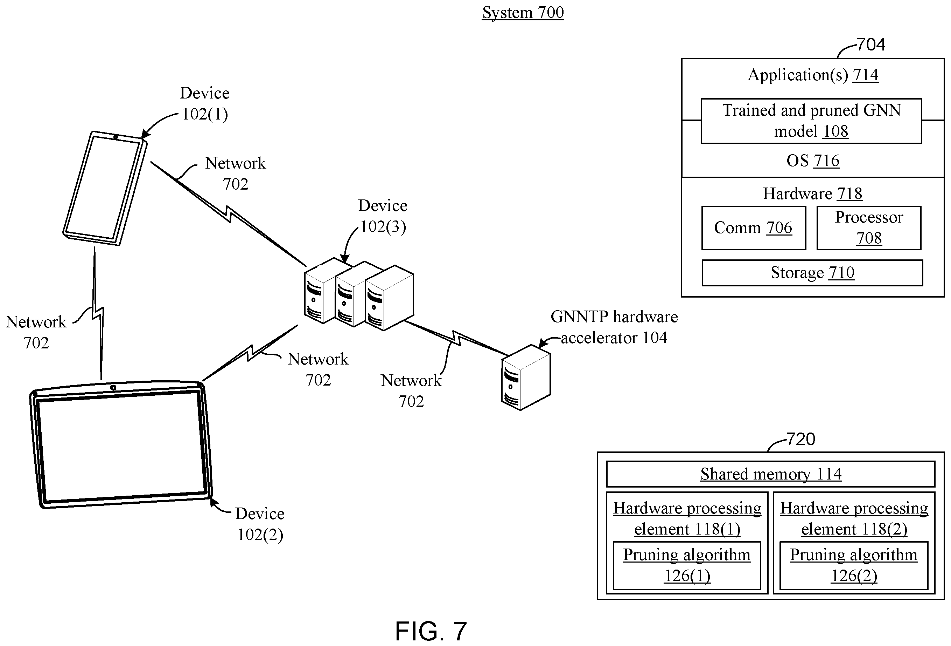

FIG. 7 shows an example system 700 that is similar to system 100 introduced relative to FIGS. 1A and 1B. System 700 can include devices 102 and GNNTP hardware accelerator 104. GNNTP hardware accelerator 104 is configured to train and prune GNN models. Devices 102 are configured to employ the trained and pruned GNN models 108. In the illustrated configuration, device 102(1) is manifest as a smartphone, device 102(2) is manifest as a tablet type device, and device 102(3) is manifest as a server type computing device, such as may be found in a datacenter. Devices 102 and GNNTP hardware accelerator 104 can be coupled via one or more networks 702 that are represented by lightning bolts.

As shown at 704, devices 102 can include a communication component 706, a processor 708, and memory/storage 710. The processor 708 can include CPUs and/or GPUs. The devices can also include one or more applications 714, operating system 716, and hardware 718. The trained and pruned GNN model 108 can operate cooperatively with the operating system and/or the applications. Further, as mentioned above, the devices 102 can receive the untrained GNN model and send the untrained GNN model to the GNNTP hardware accelerator 104.

As shown at 720, the GNNTP hardware accelerator 104 includes shared memory 114 and multiple hardware processing elements 118. Each of the multiple hardware processing elements 118 can implement pruning algorithms to prune sub-units of the GNN model. The processing elements can be manifest on fixed-logic circuitry such as FPGAs or ASICs, among others.

The term "device," "computer," or "computing device" as used herein can mean any type of device that has some amount of processing capability and/or storage capability. Processing capability can be provided by one or more processors that can execute data in the form of computer-readable instructions to provide a functionality. Data, such as computer-readable instructions and/or user-related data, can be stored on storage, such as storage that can be internal or external to the device. The storage can include any one or more of volatile or non-volatile memory, hard drives, flash storage devices, and/or optical storage devices (e.g., CDs, DVDs etc.), remote storage (e.g., cloud-based storage), among others. As used herein, the term "computer-readable media" can include signals. In contrast, the term "computer-readable storage media" excludes signals. Computer-readable storage media includes "computer-readable storage devices." Examples of computer-readable storage devices include volatile storage media, such as RAM, and non-volatile storage media, such as hard drives, optical discs, and flash memory, among others.

### CONCLUSION

The description relates to GNN training and pruning hardware accelerator concepts. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

### ADDITIONAL EXAMPLES

Various examples are described above. Additional examples are described below. One example includes a system comprising a device configured to receive a graph neural network model and a graph neural network hardware accelerator configured to receive the graph neural network model from the device and to divide the graph neural network model into multiple subgraphs, the graph neural network hardware accelerator comprising a memory shared by multiple parallel hardware processing elements employing pruning algorithms to individual subgraphs which are recombined on the shared memory to generate a trained and pruned graph neural network model and to send the trained and pruned graph neural network model to the device for generating output to a received user prompt.

Another example can include any of the above and/or below examples where the graph neural network hardware accelerator further comprises a field programable gate array that includes the multiple parallel hardware processing elements employing pruning algorithms.

Another example can include any of the above and/or below examples where the graph neural network hardware accelerator further comprises an application specific integrated circuit (ASIC) that includes the multiple parallel hardware processing elements employing pruning algorithms.

Another example can include any of the above and/or below examples where the device includes a central processing unit (CPU) and a graphical processing unit (GPU) and wherein the CPU is configured to send the graph neural network model to the graph neural network hardware accelerator, and wherein the trained and pruned graph neural network model is stored and employed on the GPU.

Another example can include any of the above and/or below examples where the pruning algorithm comprises a Gradient Signal Preservation (GraSP) pruning algorithm.

Another example can include any of the above and/or below examples where the graph neural network hardware accelerator is configured in a pipeline configuration with the multiple processing elements arranged in parallel and pruning individual subgraphs and passing the pruned subgraphs to the shared memory until all of the subgraphs have been pruned.

Another example can include any of the above and/or below examples where the pipeline configuration comprises multiple FPGAs arranged in parallel with each FPGA comprising multiple processing elements arranged in parallel to one another.

Another example includes a device implemented method comprising receiving an untrained graph neural network (GNN) model at a hardware accelerator comprising multiple field programmable gate arrays (FPGAs) that each comprise multiple parallel arranged hardware processing elements and a shared memory, dividing the untrained GNN model into multiple subgraphs, distributing the multiple subgraphs among the multiple hardware processing elements of the multiple FPGAs for parallel processing, employing parallel processing across the multiple hardware processing elements to prune individual subgraphs on individual hardware processing elements utilizing GraSP algorithms, recombining the pruned subgraphs into a trained and pruned GNN model, and sending the trained and pruned GNN model to a device comprising a central processing unit or graphics processing unit for processing of user queries.

Another example can include any of the above and/or below examples where employing parallel processing comprises performing initial training of an individual subgraph on an individual hardware processing element with the GraSP algorithm.

Another example can include any of the above and/or below examples where the method further comprises calculating gradients of the individual subgraph for the GraSP algorithm.

Another example can include any of the above and/or below examples where the method further comprises calculating scores for neurons and connections of the individual subgraph with the GraSP algorithm.

Another example can include any of the above and/or below examples where the method further comprises setting an initial threshold for the individual subgraph.

Another example can include any of the above and/or below examples where the method further comprises comparing the calculated scores for the neurons and connections of the individual subgraph to the initial threshold.

Another example can include any of the above and/or below examples where the method further comprises pruning the neurons and/or connections of the individual subgraph having calculated scores below the initial threshold.

Another example can include any of the above and/or below examples where the method further comprises sending the pruned individual subgraph to memory that is shared by all of the processing elements.

Another example can include any of the above and/or below examples where the method further comprises retraining the pruned individual subgraph on the shared memory.

Another example can include any of the above and/or below examples where the method further comprises evaluating performance of the retrained pruned individual subgraph.

Another example can include any of the above and/or below examples where in an instance where the performance of the retrained pruned individual subgraph is satisfactory, further comprising integrating the retrained pruned individual subgraph with other retrained pruned individual subgraphs to form the trained and pruned GNN model, and in an alternative instance where the performance of the retrained pruned individual subgraph is not satisfactory iteratively returning to score the neurons and connections of the retrained pruned individual subgraphs with the GraSP algorithms on the individual processing elements.

Another example can include any of the above and/or below examples where each processing element employs an instance of a pruning algorithm to generate the pruned subgraphs.

Another example includes a device-implemented method comprising receiving an untrained graph neural network (GNN) model at memory shared between multiple hardware accelerators, dividing the untrained GNN model into multiple subgraphs, distributing the multiple subgraphs among the multiple hardware accelerators for parallel processing, employing parallel processing on the multiple hardware accelerators to prune the multiple subgraphs utilizing pruning algorithms while training the subgraphs, recombining the trained and pruned subgraphs into a trained and pruned GNN model, and generating output with the trained and pruned GNN model from received prompts.

Another example can include any of the above and/or below examples where the recombining comprises evaluating the trained and pruned GNN model and performing more iterations of the employing and recombining until the evaluating identifies satisfactory performance.

Another example can include any of the above and/or below examples where the recombining comprises integration of the trained and pruned subgraphs into the trained and pruned GNN model once satisfactory performance is identified.

Another example includes a graph neural network hardware accelerator comprising multiple FPGAs that each comprise multiple parallel arranged processing elements, a shared memory coupled to the multiple FPGAs, individual processing elements configured to prune a subgraph of a graph neural network model, and the shared memory configured to recombine the pruned subgraphs to generate a pruned graph neural network model.

Another example can include any of the above and/or below examples where each processing element employs an instance of a pruning algorithm to generate the pruned subgraphs.

Another example includes graph neural network hardware accelerators. One example can include multiple FPGAs or ASICs that each include multiple parallel arranged processing elements and a shared memory. Individual processing elements are configured to prune a subgraph of a graph neural network model. The shared memory is configured to recombine the pruned subgraphs to generate a pruned graph neural network model.

## Claims

1. A system (100), comprising:
a device (102) configured to receive a graph neural network model (106); and,
a graph neural network hardware accelerator (104) configured to receive the graph neural network model from the device and to divide the graph neural network model into multiple subgraphs (130), the graph neural network hardware accelerator comprising a memory (114) shared by multiple parallel hardware processing elements (118) employing pruning algorithms (126) to individual subgraphs which are recombined on the shared memory to generate a trained and pruned graph neural network model (108) and to send the trained and pruned graph neural network model to the device for generating output (112) to a received user prompt (110).

2. The system of claim 1, wherein the graph neural network hardware accelerator further comprises a field programable gate array that includes the multiple parallel hardware processing elements employing pruning algorithms.

3. The system of claim 1 or claim 2, wherein the graph neural network hardware accelerator further comprises an application specific integrated circuit, ASIC, that includes the multiple parallel hardware processing elements employing pruning algorithms.

4. The system of claim 3, wherein:
the device includes a central processing unit, CPU, and a graphical processing unit, GPU;
the CPU is configured to send the graph neural network model to the graph neural network hardware accelerator; and
the trained and pruned graph neural network model is employed on the GPU.

5. The system of claim 4, wherein the pruning algorithm comprises a Gradient Signal Preservation, GraSP, pruning algorithm.

6. The system of any of claims 1 to 5, wherein:
the graph neural network hardware accelerator is configured in a pipeline configuration with the multiple processing elements arranged in parallel and pruning individual subgraphs and passing the pruned subgraphs to the shared memory until all of the subgraphs have been pruned; and
the pipeline configuration comprises multiple FPGAs arranged in parallel with each FPGA comprising multiple processing elements arranged in parallel to one another.

7. A device-implemented method (500), comprising:
receiving (502) an untrained graph neural network, GNN, model at a hardware accelerator comprising multiple field programmable gate arrays, FPGAs, that each comprise multiple parallel arranged hardware processing elements and a shared memory;
dividing (504) the untrained GNN model into multiple subgraphs;
distributing (506) the multiple subgraphs among the multiple hardware processing elements of the multiple FPGAs for parallel processing;
employing (508) parallel processing across the multiple hardware processing elements to prune individual subgraphs on individual hardware processing elements utilizing GraSP algorithms;
recombining (510) the pruned subgraphs into a trained and pruned GNN model; and,
sending (512) the trained and pruned GNN model to a device comprising a central processing unit or graphics processing unit for processing of user queries.

8. The method of claim 7, wherein:
employing parallel processing comprises performing initial training of an individual subgraph on an individual hardware processing element with the GraSP algorithm; and
the method further comprises:
calculating gradients of the individual subgraph for the GraSP algorithm; and
calculating scores for neurons and connections of the individual subgraph with the GraSP algorithm.

9. The method of claim 8, further comprising:
setting an initial threshold for the individual subgraph; and
comparing the calculated scores for the neurons and connections of the individual subgraph to the initial threshold.

10. The method of claim 9, further comprising:
pruning the neurons and/or connections of the individual subgraph having calculated scores below the initial threshold; and
sending the pruned individual subgraph to memory that is shared by all of the processing elements.

11. The method of claim 10, further comprising retraining the pruned individual subgraph on the shared memory.

12. The method of claim 11, further comprising evaluating performance of the retrained pruned individual subgraph.

13. The method of claim 12, wherein in an instance where the performance of the retrained pruned individual subgraph is satisfactory, further comprising integrating the retrained pruned individual subgraph with other retrained pruned individual subgraphs to form the trained and pruned GNN model, and in an alternative instance where the performance of the retrained pruned individual subgraph is not satisfactory iteratively returning to score the neurons and connections of the retrained pruned individual subgraphs with the GraSP algorithms on the individual processing elements.

14. A graph neural network hardware accelerator (104), comprising:
multiple FPGAs (116) that each comprise multiple parallel arranged processing elements (118);
a shared memory (114) coupled to the multiple FPGAs;
individual processing elements configured to prune a subgraph (130) of a graph neural network model (106); and,
the shared memory configured to recombine the pruned subgraphs (132) to generate a pruned graph neural network model (108).

15. The graph neural network hardware accelerator of claim 14, wherein each processing element employs an instance of a pruning algorithm to generate the pruned subgraphs.
